# EUROPEAN PATENT APPLICATION

(11) **EP 4 274 064 A1**
(43) Date of publication of application: **08.11.2023**
(21) Application number: 22315092.1
(22) Date of filing: 02.05.2022
(51) Int. Cl.: H02K 3/28

(54) **STATOR FOR ELECTRIC MOTOR**

(71) Applicant: Valeo Systèmes d'Essuyage, 78322 Le Mesnil Saint Denis (FR)
(72) Inventor: Herrada, Jose-Luis, 78322 LE MESNIL SAINT DENIS CEDEX (FR); Belhaj, Mehdi, 78322 LE MESNIL SAINT DENIS CEDEX (FR)
(74) Representative: Valeo Visibility

(57) **Abstract**

A stator (110) for a brushless electric motor (100) comprises a stator body and a plurality of windings (150) each wound about one of a plurality of teeth (140) of said stator body, a plurality of electrical connection elements (300, 300A) establishing an electrical connection between said plurality of windings (150), and a support element (305) for retaining said plurality of electrical connection elements (300, 300A) disposed in a plurality of layers, the support element (305) presenting a plurality of reference surfaces (400AR, 405R, 405RB, 405RC, 405RD, 405RE, 410R, 410RB, 410RC, 410RD, 410RE) each extending in a plane oriented perpendicularly to the stator axis, and further comprising at least one radial extension (325, 500) and being disposed in the annular channel (320) of the support element (305) with each at least one radial extension (325, 500) disposed upon a respective one of said plurality of reference surfaces (405R, 405RB, 405RC, 405RD, 405RE, 410R, 410RB, 410RC, 410RD, 410RE).

## Description

### TECHNICAL FIELD

The present invention concerns a stator for an electric motor. More particularly, the present invention concerns an electrical interconnection arrangement for a stator of a brushless electric motor, as well as an electric motor comprising such an arrangement.

### BACKGROUND OF THE INVENTION

Brushless DC electric motors, or simply "brushless motors," are well-known in the art of electric machines; a brushless motor differs from a conventional, brushed electric motor in that the commutation of the different electrical phases is performed electronically, rather than by use of a commutator. Brushless electrical motors have many advantages over traditional electric motors, in that the electronic commutation eliminates the traditional carbon-brush commutator, whose disadvantages are well-known and understood in the art.

Consequently, in a brushless motor, the rotor is configured as a multipole permanent magnet and the stator is configured as a multipole electromagnet. During the operation of the motor, the different poles of the electromagnet are energized and de-energized in a precisely-timed manner.

Since the electromagnets which constitute the poles of the electromagnet must be supplied current individually, or at the very least grouped into phases, the brushless motor must also comprise a complex wiring arrangement so as to ensure that each of the windings of the stator may be fed with current at the right moment. A number of electrical connection elements, generally flexible wires or conductive metallic strips, constitute this arrangement. In the latter case, the strips are collectively referred to as a "leadframe."

Providing these connections in the form of a leadframe is particularly advantageous, in that the resulting electrical connections are more compact and robust, and easier to fabricate, than a wired connection. However, the relatively rigid nature of the metallic strips that constitute the leadframe require that they be installed within the brushless motor with great care to ensure correct positioning; otherwise an impermissible degree of strain may be placed upon the solder joints between the leadframes and the winding wires during operation. This can lead to broken connections and faulty operation of the brushless motor.

There is thus a need to provide a means for facilitating the positioning of the leadframes within the housing of the brushless motor, in a simple and precise manner, and at minimal additional cost, size, or complexity.

It is therefore an object of the invention to provide a stator for a brushless DC electric motor which resolves or ameliorates at least some of the foregoing disadvantages of the brushless motors known in the art.

### SUMMARY OF THE INVENTION

In a first aspect, the invention is directed towards a stator for a brushless electric motor, comprising a stator body comprising a plurality of teeth disposed about an axis of the stator and a plurality of windings each wound about a respective one of said teeth; a plurality of electrical connection elements configured to establish an electrical connection between said plurality of windings, each of said electrical components comprising a conductive strip in the form of an arc of a circle; and a support element for retaining said plurality of electrical connection elements, said support element comprising an annular channel into which said electrical connection elements are disposed in a plurality of layers.

According to the invention, the support element presents a plurality of reference surfaces each extending in a plane oriented perpendicularly to the stator axis, each of said plurality of connection elements further comprising at least one radial extension and being disposed in the annular channel of the support element such that said at least one radial extension is disposed upon a respective one of said plurality of reference surfaces.

Since each of the electrical connection elements is disposed upon at least one reference surface, the axial position of the electrical connection elements will be advantageously fixed at the axial position of the reference surface. To correctly position the electrical connection element, the user need simply insert the electrical connection element into the support element's annular channel and dispose he electrical connection element against the reference surface; the electrical connection element will be automatically positioned at the correct axial position by virtue of the placement of its at least one radial extension upon the corresponding reference surface, without any additional adjustment or calibration necessary.

Additionally, since the axial position of each of the electrical connection elements is set with respect to the support element, rather than with respect to each other, the stacking of tolerances between the electrical connection elements (and any interleaved insulating elements, if present) is eliminated. The electrical connection elements are therefore positioned in a much more precise manner than would be otherwise reasonably feasible.

In a possible embodiment, the annular channel of the support element comprises a first annular wall and a second annular wall disposed radially exterior to said first exterior wall, and a bottom surface extending transversely between said first and second annular walls, each of the reference surfaces being formed in or extending from one of said first and second annular walls and bottom surface.

Such a configuration is advantageous in that the annular walls provide a convenient substrate for forming the reference surfaces, while orienting and retaining the electrical conduction elements in the radial direction.

In a possible variant, each of the plurality of reference surfaces extends in one of a plurality of reference planes each oriented perpendicularly to the stator axis.

In this manner, the electrical connection elements are maintained in a substantially perpendicular orientation relative to the axis of the stator, thereby preventing dimensional variations and stress concentrations at the joints between the electrical connection elements and the stator windings.

Preferably, at least two reference surfaces extend in each of said plurality of reference planes.

Such a configuration is advantageous in that it provides at least two points of contact with the reference surface for the electrical connection element, further improving the accuracy of its positioning within the support element. Alternatively, or additionally depending on the configuration, the provision of additional reference surfaces in each plane allows for multiple, discontinuous electrical connection elements to be disposed in each plane, augmenting the flexibility and capacity of the stator for accommodating ever more complex schemas for the electrical interconnection of the stator windings.

Preferably, the plurality of reference planes are spaced equidistantly along the axis of the stator.

In a possible embodiment, at least one of the reference surfaces is a notch or ledge.

Such a configuration is advantageous in that a simple notch or ledge may easily be formed in the support element, possibly (but not necessarily) in one of the annular walls thereof, in a manner that requires no substantial additional reconfiguration or retooling during manufacture, while still maintaining a high degree of precision in its axial position. In particular, a notch or ledge may be provided by a simple milling operation.

In a possible embodiment, each of the plurality of electrical connection elements each comprises at least two radial extensions.

Preferably, the at least two radial extensions are grouped into at least one radially-aligned pair, each pair comprising a first radial extending in a radially-inward direction and a second radial extension extending in a radially-outward direction.

This is particularly advantageous in that it provides an additional degree of stability in the position of the electrical connection element. In particular, when the radial extensions are aligned in this manner, the In a possible embodiment, at least one of the plurality of electrical connection elements further comprises at least one retention element, said at least one retention element extending in an axial direction and fixedly attached to the support element.

In this way, the entire array of electrical connection elements, as well as any interleaved insulation elements, are securely retained within the support element.

Preferably, the at least one retention element comprises barbs or hooks.

Such a configuration is particularly advantageous in that the retention elements are locked into the support element permanently and without tools, firmly fixing the corresponding electrical connection element into the support element in a secure and permanent manner.

According to a second aspect, the invention is directed towards an electric motor comprising a stator as described above.

Such a motor is advantageous, in that it incorporates the advantages of such a stator, as described above with respect thereto.

Further advantages, features, and details of the invention will be apparent from the following discussion of preferred embodiments of the invention, and of the Figures illustrating such embodiments.

### BRIEF DESCRIPTION OF THE FIGURES

To further facilitate understanding of the invention, the invention is described by way of example with reference to the accompanying drawings, in which:
Figure 1 is a front perspective view of an electric motor according to a first embodiment of the invention;
Figure 2 is a rear perspective view of the electric motor of Figure 1;
Figures 3A and 3B are perspective views of a leadframe assembly of the electric motor of Figure 1, from the front and rear respectively;
Figures 4A and 4B are perspective detail views of the leadframe assembly of Figure 1;
Figure 5 is a perspective detail view of the leadframe assembly of Figure 1;
Figure 6 is a representational section view of the leadframe assembly of Figure 1; and
Figure 7 is an exploded view of the leadframe of Figure 1.

### DETAILED DESCRIPTION

It should be understood that all dimensional references in the following description and attached claims should be interpreted as being relative to the rotational axis of the electric motor. In particular, the term "axial" refers to the direction along or parallel to the rotational axis of the motor, and "radial" refers to a direction perpendicular to the rotational axis of the motor.

Moreover, features described below in relation to one of the embodiments should be considered as applicable to all of the embodiments, to the extent that such broad application is not contradictory.

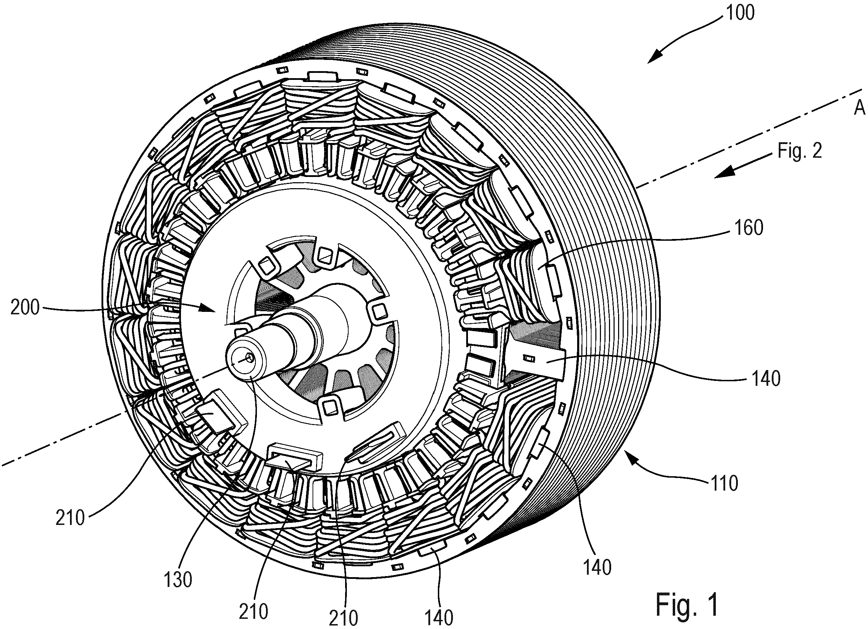

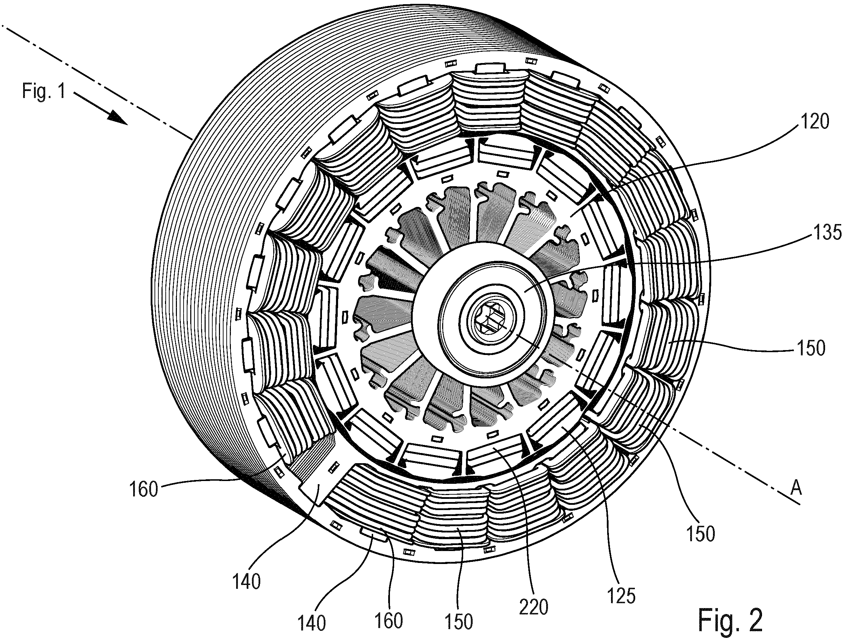

The basic structure of an exemplary brushless DC electric motor according to the present invention will be discussed in relation to Figures 1 and 2. Figure 1 illustrates a brushless electric motor 100 according to the invention, comprising a stator 110 and a rotor 120 bearing a motor shaft 130 mounted on at least one bearing 135. Figure 2 illustrates this same motor 100, but viewed from a reverse angle. As certain elements may be more easily identified from one view than the other, unless otherwise noted the following discussion applies equally to Figures 1 and 2.

The stator 110, rotor 120, and motor shaft 130 are constructed with radial symmetry about the rotational axis A of the motor, notably to ensure correct rotational balance during operation. One may therefore consider that the "stator axis" and "rotor axis," *i.e.* the axes of rotational symmetry of each of these components, is one and the same, coincident with the rotational axis A of the motor. For the sake of simplicity, the following discussion will refer only to the rotational axis A as noted in Figures 1 and 2.

The stator 110 comprises a plurality of stator teeth 140, of which only some are notated in Figure 1 for clarity. The stator teeth 140 are disposed about the circumference of the stator 110, at equal angular intervals, and extend radially inwards towards the rotational axis A of the electrical motor 100. However, other configurations of motors employ the inverse configuration, where the stator teeth 140 extend outwardly from the rotational axis A.

Around each of the stator teeth 140 is wound a stator winding 150. Between each stator winding 150 and a respective stator tooth 140 is disposed a stator insulator 160; the stator insulator serves to prevent short circuiting between the stator tooth 140 and the stator winding 150, and to retain the stator winding 150 in place generally. When the stator winding 150 is energized, the stator winding 150 and stator tooth 140 generate an electric field, thus constituting a pole of the stator 110.

While not all of the stator teeth 140 illustrated in Figures 1 and 2 are provided with a stator winding 150 and/or stator insulator 160, this is done merely for illustration; in use all of the stator teeth will comprise respective stator insulators and stator windings.

The rotor 120 comprises a rotor body 125 constituted by a stack of individual laminae, which are preferably cut or stamped from sheets of silicon steel and bound together to form a generally cylindrical shape. The rotor 120 further comprises a plurality of permanent magnets 150, disposed along the circumference of the rotor 120 to as to form individual rotor poles. When the rotor 120 is disposed coaxially within the stator 110, the poles of the rotor 120 face the poles of the stator 110. By energizing and de-energizing the stator windings 150 in a controlled manner, the rotor 120 is made to spin.

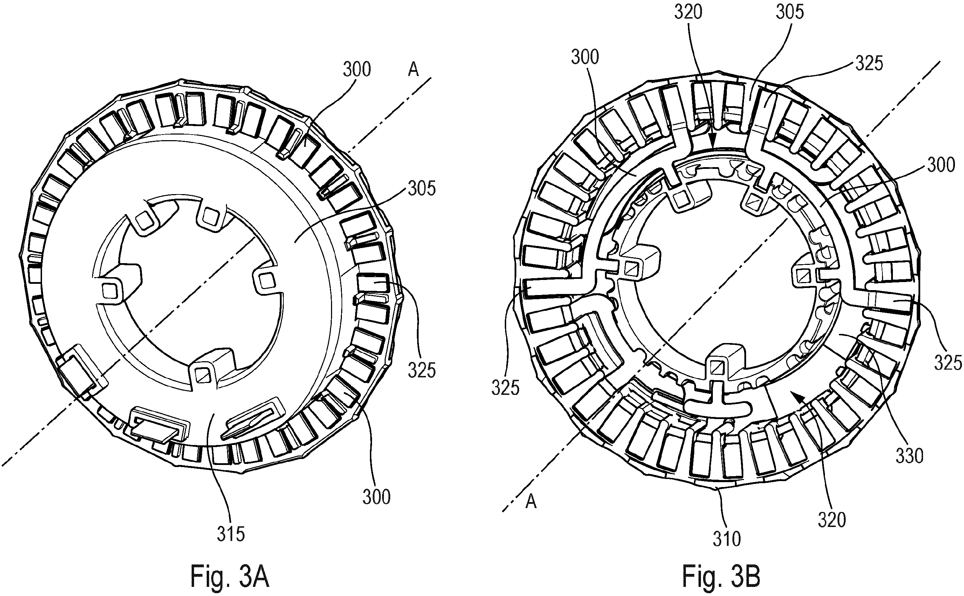

In order to provide electrical power to each of the stator windings 150 in a controllable manner, the stator 100 is further provided with a leadframe assembly 200, which will be discussed briefly in relation to Figures 1 and 2 and in detail further below. The leadframe assembly 200 comprises a plurality of electrical connection elements (discussed in further detail below with respect to Figs. 3A, and 3B *et* seq.), which connect the individual poles of the stator 110, *i.e.* the stator windings 150, into a plurality of phases, which may be selectively energized; generally speaking the stator will present three phases, designated U, V, and W. The leadframe assembly 200 also comprises the terminals 210, which correspond to the U, V, and W phases of the stator 110. The exact electrical schema for connecting the different stator windings 150 will be easily determined by the skilled person and will not be discussed here.

Figures 3A and 3B illustrate in detail the leadframe assembly 200 of Figures 1 and 2, from front and back sides, respectively; the rotor and stator are removed for the sake of clarity.

In order to properly terminate each of the ends of each of the stator windings 150 to the correct terminals 210, the leadframe assembly comprises a series of electrical connection elements 300, which are housed in the support element 305.

The support element 305 is a globally disc-shaped structure, comprising a rim portion 310 and a hub portion 315. The hub portion 315 defines an annular channel 320, into which the electrical connection elements 300 are installed.

The electrical connection elements 300 are disposed such that a portion thereof, the tabs 325, protrude from the hub portion 315 and onto the rim portion 310. The tabs 325 are configured such that each end of the stator windings 150 is attached to a corresponding one of the tabs 325, thereby establishing an electrical connection.

As can be seen in Figure 3B, the electrical connection elements 300 are configured such that their respective tabs do not necessarily connect adjacent stator windings 150; rather, the electrical connection elements 300 are preferably provided in the form of an arc of a circle, extending over a portion of the diameter of the annular channel 320 in the hub portion 315.

It will naturally be understood that any individual one of the electrical connection elements 300 may extend in the annular channel 320 about the axis A over a greater or lesser angular extent, depending on which of the stator windings it is meant to connect. The form of the electrical connection elements300 illustrated in Figures 3A and 3B should therefore not be construed as limiting, but merely exemplary.

Consequently, there are provided several layers of electrical connection elements 300, which are separated by interleaved insulating elements 330, of which one is visible in Figure 3B. The insulating elements 330 are ring-shaped, such that they are accommodated in the annular channel 320 between successive layers of electrical connection elements 300.

The electrical connection elements are preferably fabricated from a conductive metal, and preferably one with satisfactory electrical properties for the specific operating conditions envisaged for the motor. For instance, metals such as brass, copper, or spring steel might be envisioned. It may also be desirable to furnish the electrical connection elements as a plated metal component, so as to combine the conductive properties of one metal with the mechanical properties of another (for instance, spring steel plated with silver).

The insulating elements 330 may be formed from any of a number of electrically-insulating materials, for instance cork, rubber, phenolic, polyamide, polyimide, or other such materials which present the required insulating capacity and elasticity in response to compressive force.

The electrical connection elements 300 and the insulating elements 330 are thus disposed in the annular channel 320 of the hub portion 315 and retained in place by a compressive force. This compressive force may be exerted by pressing the stator body 200 or other components of the motor against the leadframe assembly 200, or by retention elements which will be described in further detail below.

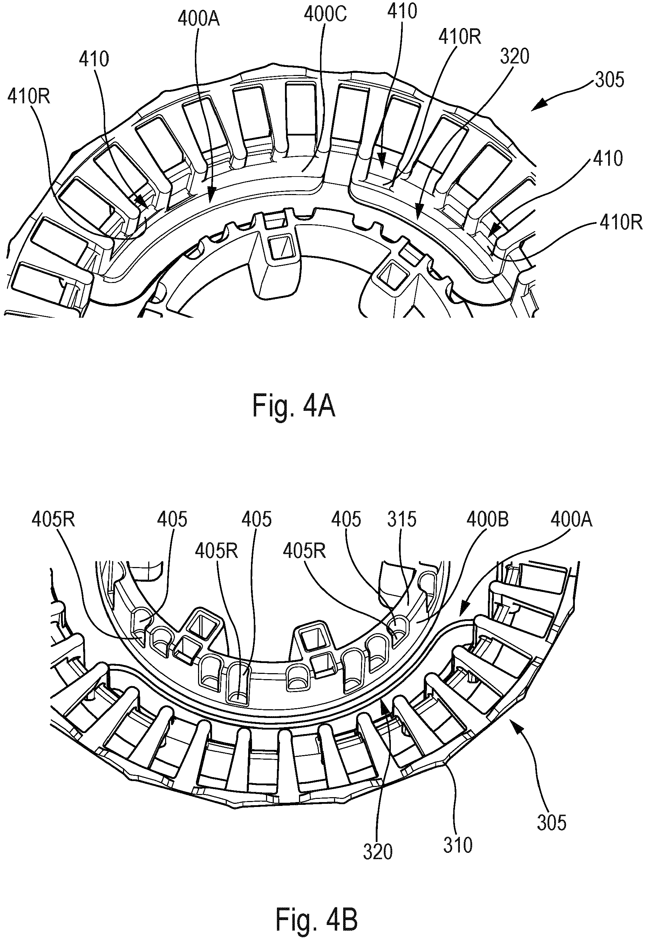

Figures 4A and 4B illustrates a support element 305 according to an embodiment of the invention. More particularly, Figures 4A and 4B illustrate the same support element 305, viewed from two different angles so as to better illustrate the features discussed below. As such, Figures 4A and 4B will be discussed here jointly.

As in Figures 3A and 3B, the support element 305 comprises a rim portion 310 and a hub portion 315. The hub portion 315 presents an annular channel 320, which is globally defined by a bottom face 400A, an inner annular wall 400B, and an outer annular wall 400C.

The bottom face 400A serves primarily as a datum for the establishment of reference planes, according to and upon which the electrically conductive elements 330 discussed above are positioned and placed. Optionally, and as illustrated in Figures 4A and 4B, the bottom face 400A may be configured to conform to the shape of an electrically conductive element 330 that is to be placed against it, further securing it once the stator assembly 200 is assembled.

The support element 305 comprises a plurality of ledges 405, which are formed in the inner annular wall 400B. For clarity, only three are labeled in Figure 4B. The ledges 405 each present a reference surface 405R, at an extremity thereof that is most axially proximal to the bottom face 400A.

The support element 305 also comprises a plurality of notches 410, which are formed in the outer annular wall 400C. For clarity, only three are labeled in Figure 4A. As with the ledges 405, the notches 410 each present a reference surface 410R, which is disposed at an extremity thereof most proximal to the bottom face 400A.

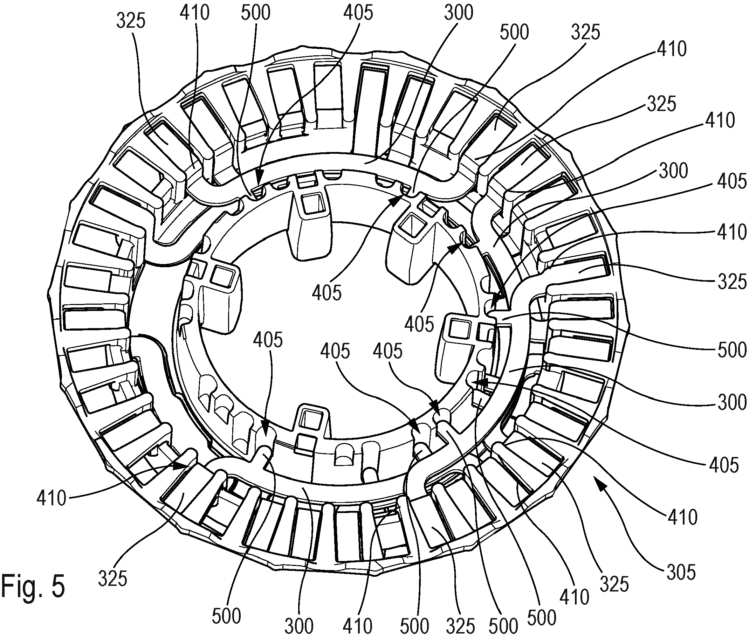

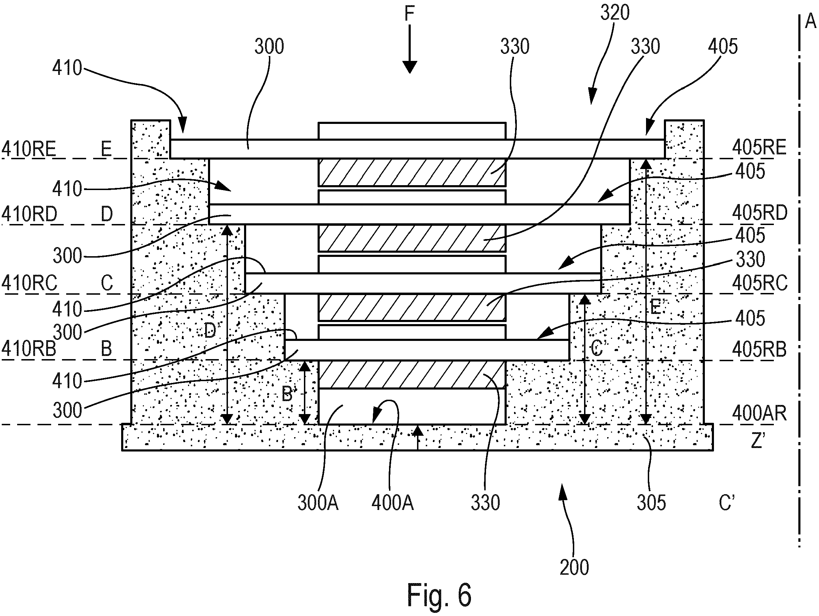

The support element 305 is fabricated such that each of the reference surfaces 405R of the ledges 405 are at a specific, precise, pre-determined distance from the bottom face 400A. In this way, the reference surfaces 405R, 410R collectively define at least one reference plane, upon which the electrically conductive elements are placed as discussed in further detail below with respect to Figures 5 and 6.

More particularly, and as illustrated in the Figures, the ledges 405 and notches 410 are formed with different depths. As a consequence, the corresponding reference planes are offset relative to the bottom surface 400A by different distances. In this way, the electrical connection elements 330 placed against each of these reference surfaces 405R, 410R are positioned at different depths within the annular channel 420. The reference planes defined by the reference surfaces 405R, 410R are preferably made equidistant, *i.e*. offset by a constant amount, so as to simplify fabrication and assembly. Alternatively, they may be offset from each other by a distance which varies from layer to layer, or possibly within a layer if required by the particular needs of the implementation.

Moreover, by fabricating the support element 305 with a sufficient degree of precision, the positions of the reference surfaces 405R, 410R are fixed with precision. As a result, the position of the electrical connection elements 330 is determined with a great deal of precision and reliability.

Depending on the materials and processes used to fabricate the support element 305, this may be achieved by fabricating the ledges 405 and notches 410 simultaneously with the rest of the support element 305. Alternatively, it may be that the ledges 405 and notches 410 are fabricated with an additional manufacturing step that is much more precise than that used to fabricate the support element 305 generally. For instance, the support element 305 may be fabricated by a relatively lowprecision injection molding step, while the ledges and notches are fabricated by cutting them into the support element 305 in a subsequent, high-precision machining step.

Figure 5 illustrates how the electrical connection elements 300 may be disposed in the support element 305 of the stator assembly 200. For the sake of clarity only a few of the electrical connection elements 300 are depicted, and all of the interleaved insulating elements 330 are omitted.

Each of the electrical connection elements 300 comprises a plurality of radial extensions from the main, arc-shaped body thereof. At least two tabs 325, as described above, extend radially outwards from the electrical connection element 300; and at least one finger 500 extends radially inwards from the electrical connection element 300. The tabs 325 are configured so as to at least partially rest upon the reference surface 410R that is constituted in the corresponding notch 410 in the support element 305, and the fingers 500 likewise are configured so as to rest at least partially on the reference surface 405R constituted in the corresponding ledge 405. As the axial position of each of the reference surfaces 405R, 410R is precisely fixed, as described above, so too is the axial position of each of the electrical connection elements 300 fixed.

It is particularly advantageous to provide the radial extensions of the electrical connection elements 300 (*i.e.* the tabs 325 and the fingers 500) in pairs, as illustrated in Figure 5. These pairs may be substantially aligned radially, as illustrated here: a slight offset in the circumferential direction between each tab 325 and its corresponding finger 500 is observed but the two elements are co-located in a general sense. Alternatively, the tabs 325 and their corresponding fingers 500 may be strictly aligned radially, with little or no offset in the circumferential direction. In either case, such a configuration is advantageous in that it provides a great deal of positional stability to the electrical connection element.

Turning now to Figure 6, a schematic section of the stator assembly 200 is illustrated, comprising a support element 305 with its annular channel 320. In the annular channel 320 are disposed a plurality of electrical connection elements 300, interleaved with insulating elements 330. As described in relation to the preceding Figures, a plurality of electrical connection elements 300 comprises at least one finger 500 disposed upon a ledge 405 and at least one tab 325 disposed on a notch 410.

Additionally, the bottom-most electrical connection element 300A is disposed directly on the bottom face 400A of the annular channel 320. The bottom face 400A thus also constitutes a reference surface 400AR, formed in the supporting element 305.

It will be readily understood that the notches 405 and ledges 410 for each layer of the stator assembly are disposed at different angular positions about the axis A of the stator. However, it will be understood that in Figure 6 one of each is illustrated in a facultative section plane, for the sake of illustration.

As discussed above, in each layer the ledges 405 and notches 410 define respective reference surfaces 405R, 410R. The electrical connection component 300A is disposed against the reference surface 400AR of the bottom face 400A, and is therefore positioned relative thereto with zero offset. On the other hand, the electrical connection elements 300 of the other layers are offset along the stator axis A from the bottom face 400A by precise, predetermined spacings.

More specifically, the reference plane B is defined by the reference surfaces 405RB, 410RB of the second layer, and is offset from the reference plane 400AR by the offset B'. Likewise, the reference planes C, D, and E are defined by reference surfaces 405RC and 410RC; 405RD and 410RD; and 405RE and 410RE, respectively; and offset from the reference plane 400AR by the offsets C', D', and E', respectively.

In this manner, the effect of tolerance stacking in the layers of the stator assembly 200 is greatly reduced, since the axial position of each of the electrical connection elements 300 is determined directly from the reference plane 400AR corresponding to the bottom face 400A of the annular channel 320.

Moreover, by providing a compressive force F to retain the layers of electrical connection elements 300 and insulating elements 330 in place, and/or providing a degree of compressional elasticity in the insulating elements 330, the electrical connection elements 300 are maintained in abutment against the various reference surfaces. In this way, the dimensional relationships in the stator assembly 200 are rapidly established and reliably maintained.

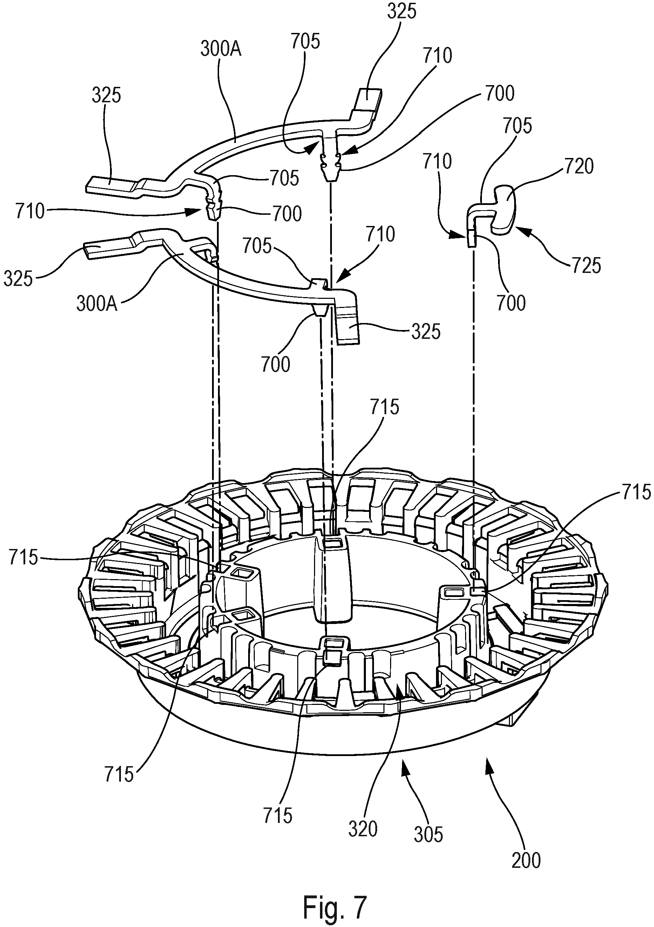

Figure 7 is an exploded view of a leadframe assembly 200; a number of components, including the insulating elements and most of the electrical connection elements, are omitted for clarity. Figure 7 depicts the last, most distal of the electrical connection elements 300, here noted as electrical connection elements 300A. The electrical connection elements 300A in this layer are distinguished from those in other, more proximal layers, in that they are further provided with at least one retention element 700.

Each at least one retention element 700 extends from its respective electrical connection element 300A in a substantially axial direction (the axis A is omitted here for clarity but is oriented in the same manner as in the preceding Figures). Each retention element 700 is ideally formed integrally with its respective electrical connection element 300A; for instance, in the embodiment depicted in the Figures, the retention elements 700 are formed in one piece with the electrical connection elements 300 in a metalworking step (e.g. stamping) and are connected therewith by a neck 705, which is subsequently bent so as to place the retention element 700 in a desired alignment.

The retention elements 700 further comprise a locking means 710, which permanently lock the retention element 700, and consequently the electrical connection element 300A, to the support element 305. In the exemplary embodiment depicted in Figure 7 the locking means 710 is a series of barbs; other permanent or semi-permanent mechanical attachment means such as hooks, clips, snaps, or the like may equally be envisioned in other embodiments.

When the electrical connection element 300A is put into place in the annular channel 320 of the support element 305, each retention element 700 is inserted into a corresponding pocket 715 formed in the support element 305. The locking means 710 will interlock with the pocket 715 (in this case, the barbs of the locking means biting into the material of the support element 305), retaining the electrical connection elements 300A in place.

As the electrical connection elements 300A are the last, most distal of the layers of electrical connection elements 300 to be installed, they will serve to retain the entire stack of electrical connection elements 300 and insulating elements 330 in place, notably by exerting a compressive force on the entire stack of electrical connection elements 300 and insulating elements 330 (*cf.* the force F illustrated in Fig. 6 and discussed above).

Moreover, each of the electrical connection elements 300 is urged against its respective ledges 405 and notches 410, ensuring that the electrical connection elements 300 are disposed in the correct one of the reference planes and thus having the correct axial position within the annular channel 320.

Figure 7 also illustrates a possible variant, which may be employed in complement to the retention elements 700 on the electrical connection elements 300A, in the form of the clamping element 720. The clamping element 720 is essentially an electrical connection element that makes no electrical connection: it comprises a short clamping portion 725 and a neck 705 leading to a locking means 710.

The clamping element may be attached to the supporting element 305, in the same manner as the electrical connection elements 300A, bringing a clamping and retaining effect to the stack of electrical connection elements and insulating elements supplemental to that obtained by the electrical connection elements 300A. In this manner, the integrity of the stator assembly 200 is further improved.

Finally, it should be noted that the invention as described by the foregoing is not limited by the specific means and configurations illustrated and described in the present specification, but rather applies equally to any equivalent or substitute means or configurations, and any combination thereof.

## Claims

1. A stator (110) for a brushless electric motor (100), comprising:
- a stator body comprising a plurality of teeth (140) disposed about an axis (A) of the stator (110) and a plurality of windings (150) each wound about a respective one of said plurality of teeth (140);
- a plurality of electrical connection elements (300, 300A) configured to establish an electrical connection between said plurality of windings (150), each of said electrical connection elements (300, 300A) comprising a conductive strip in the form of an arc of a circle; and
- a support element (305) for retaining said plurality of electrical connection elements (300, 300A), said support element (305) comprising an annular channel (320) into which said electrical connection elements (300, 300A) are disposed in a plurality of layers;
**characterized in that** the support element (305) presents a plurality of reference surfaces (400AR, 405R, 405RB, 405RC, 405RD, 405RE, 410R, 410RB, 410RC, 410RD, 410RE) each extending in a plane oriented perpendicularly to the stator axis (A), each of said plurality of electrical connection elements (300, 300A) further comprising at least one radial extension (325, 500) and being disposed in the annular channel (320) of the support element (305) such that each at least one radial extension (325, 500) is disposed upon a respective one of said plurality of reference surfaces (405R, 405RB, 405RC, 405RD, 405RE, 410R, 410RB, 410RC, 410RD, 410RE).

2. The stator (110) according to claim 1, wherein the annular channel (320) of the support element (305) comprises a first annular wall (400B) and a second annular wall (400C) disposed radially exterior to said first annular wall (400B), and a bottom surface (400A) extending transversely between said first and second annular walls (400B, 400C), each of the references surfaces (400AR, 405R, 405RB, 405RC, 405RD, 405RE, 410R, 410RB, 410RC, 410RD, 410RE) being formed in or extending from one of said first and second annular walls and bottom surface (400A, 400B, 400C).

3. The stator (110) according to any one of the preceding claims, wherein each of the plurality of reference surfaces (400AR, 405R, 405RB, 405RC, 405RD, 405RE, 410R, 410RB, 410RC, 410RD, 410RE) extends in one of a plurality of reference planes each oriented perpendicularly to the stator axis (A).

4. The stator (110) according to the preceding claim, wherein at least two reference surfaces (400AR, 405R, 405RB, 405RC, 405RD, 405RE, 410R, 410RB, 410RC, 410RD, 410RE) extend in each of said plurality of reference planes.

5. The stator (110) according to one of claims 3 or 4, wherein the plurality of reference planes are spaced equidistantly along the axis (A) of the stator.

6. The stator (110) according to any one of the preceding claims, wherein at least one of the reference surfaces (405R, 405RB, 405RC, 405RD, 405RE, 410R, 410RB, 410RC, 410RD, 410RE) is a notch or a ledge.

7. The stator (110) according to any one of the preceding claims, wherein each of the plurality of electrical connection elements (300, 300A) each comprises at least two radial extensions (325, 500).

8. The stator (110) according to the preceding claim, wherein the at least two radial extensions (325, 500) are grouped into at least one radially-aligned pair, each pair comprising a first radial extension (500) extending in a radially-inward direction, and a second radial extension (325) extending in a radially-outward direction.

9. The stator (110) according to any one of the preceding claims, wherein at least one of the plurality of electrical connection elements (300A) further comprises at least one retention element (700), said at least one retention element (700) extending in an axial direction and engaging the support element (305) such that the electrical connection element (300A) is fixedly attached therewith.

10. The stator (110) according to the preceding claim, wherein the at least one retention element (700) comprises barbs or hooks.

11. An electric motor (100) comprising a stator (110) according to any one of the preceding claims.
